# EUROPEAN PATENT APPLICATION

(11) **EP 2 996 363 A1**
(43) Date of publication of application: **16.03.2016**
(21) Application number: 13886436.8
(22) Date of filing: 07.06.2013
(51) Int. Cl.: H04W 8/00

(54) **MEASUREMENT PARAMETER CONFIGURATION METHOD, USER EQUIPMENT AND DEVICE**

(71) Applicant: Huawei Technologies Co., Ltd., Longgang District Shenzhen, Guangdong 518129 (CN)
(72) Inventor: CHEN, Dong, Shenzhen Guangdong 518129 (CN); XU, Min, Shenzhen Guangdong 518129 (CN)
(74) Representative: Epping - Hermann - Fischer
(86) International application number: PCT/CN2013/076955
(87) International publication number: WO 2014/194520

(57) **Abstract**

Embodiments of the present invention provide a method for configuring a measurement parameter, a user equipment, and an apparatus for configuring a measurement parameter, and relate to the field of communications technologies, so that a larger RE value can be configured for a UE with better receiver performance in a same small cell, and therefore, the UE can trigger a measurement event earlier to facilitate access to the small cell. The method includes: sending, by a user equipment UE, UE capability information to a radio network controller RNC; and receiving, by the UE, a measurement parameter sent by the RNC, where the measurement parameter includes an RE value used when the UE measures a cell.

## Description

### TECHNICAL FIELD

The present invention relates to the field of communications technologies, and in particular, to a method for configuring a measurement parameter, a user equipment, and an apparatus for configuring a measurement parameter.

### BACKGROUND

As mobile communications technologies develop, a user requirement is increasingly high. A quantity of system cells may be increased exponentially by introducing a small cell (Small Cell) into an existing macro network; a system capacity may be increased exponentially (even tenfold) if a throughput rate of each cell remains unchanged. A HetNet network (Heterogeneous network, heterogeneous network) is formed after the small cell is introduced into a macro cell. A small cell base station may include a home base station (also referred to as femtocell, femto), an AP (Access Point, access point), a Pico (pico base station), and a Micro (micro base station). In the following, this kind of base station is uniformly represented by the small cell base station (or an LPN: low power Node), and their gateways, for example, a gateway of the home base station, are collectively referred to as base station gateways.

The introduction of the small cell base station may increase a user rate; reduce network operation costs because the heterogeneous network with the small cell deployed may not require contiguous coverage, and small-amount planning and automatic network optimization may be achieved based on an SON (Self-Organized Network, self-organizing network) feature; and achieve energy saving and low radiation (transmit powers of some small cells may be less than a transmit power of a UE). The small cell base station is applied in a very wide range of scenarios: a home, an enterprise, a public place, and the like. The introduction of the small cell base station aims to enhance coverage in these scenarios, and may further help the macro cell perform service offloading.

Currently, on a heterogeneous network on which both a macro cell and a small cell are deployed, because a small cell base station can increase a transmission rate of a UE, the UE may choose to access the small cell to perform a service, thereby obtaining a higher transmission rate; alternatively, if current load of the macro cell in which the UE is located is relatively high, a throughput of the UE may be affected and decreased, and in this case, the UE may choose to access the small cell to continue a service, thereby obtaining a better throughput. In this way, the throughput of the UE is increased, and the load of the macro cell is decreased.

Generally, the UE triggers a cell handover by measuring pilot signal quality of each cell. Major events related to intra-frequency measurement reporting are: event 1a (event 1a: pilot quality of a cell reaches a report threshold, which is mainly used to add a cell to an active set); and event 1d (event 1d: a best cell changes, which may trigger a change of a serving cell, that is, occurrence of a handover). Generally, event 1a is triggered first, and event 1d is triggered afterwards. A signal transmit power of the small cell base station is generally less than a signal transmit power of a macro cell base station. Therefore, on the heterogeneous network on which both the macro cell and the small cell are deployed, if the current load of the macro cell in which the UE is located is relatively high, the following solution is used in the prior art to facilitate access of the UE to the small cell.

On a network side, different RE (Range Extension, range expansion) values for different small cells are configured, and the RE values respectively corresponding to the small cells to the UE are sent. When detecting a pilot signal of a small cell, the UE adds an RE value corresponding to the small cell to measured pilot signal quality of the small cell to obtain adjusted pilot signal quality, and determines whether the adjusted pilot signal quality meets a cell handover condition; if the cell handover condition is met, the UE sends a measurement report to the network side to report a cell handover event, for example, event 1d. After the measurement report is received, whether UE is handed over to the small cell is determined on the network side.

However, in the prior art, with regard to a same small cell, a same RE value is configured for all UEs, that is, added RE values are the same after all the UEs perform signal quality measurement on the same small cell.

In the prior art, with regard to the same small cell, different measurement parameter (RE) values cannot be configured according to capabilities of the UEs, for example, the following cannot be achieved by using the prior art: A larger RE value is configured for a UE with better receiver performance in the same small cell, so that the UE can trigger a measurement event earlier to access the small cell.

### SUMMARY

Embodiments of the present invention provide a method for configuring a measurement parameter, a user equipment, and an apparatus for configuring a measurement parameter, so that a larger RE value can be configured for a UE with better receiver performance in a same small cell, and therefore, the UE can trigger a measurement event earlier to facilitate access to the small cell.

According to a first aspect, a method for configuring a measurement parameter is provided, including: sending, by a user equipment UE, UE capability information to a radio network controller RNC, where the UE capability information includes: a receiver type of the UE or a maximum RE value supported by the UE; and receiving, by the UE, a measurement parameter sent by the RNC, where the measurement parameter includes an RE value used when the UE measures a cell.

With reference to the first aspect, in a first implementation manner of the first aspect, when measuring pilot signal quality of a small cell, the UE adds the RE value to the measured pilot signal quality of the small cell; or when measuring pilot signal quality of a macro cell, the UE subtracts the RE value from the measured pilot signal quality of the macro cell.

With reference to the first aspect or the first implementation manner of the first aspect, in a second implementation manner of the first aspect, the sending, by a UE, UE capability information to an RNC includes: sending, by the UE, the UE capability information to the RNC by using an RRC connection setup complete message; or sending, by the UE, the UE capability information to the RNC by using a UE capability information message; or sending, by the UE, the UE capability information to the RNC by using an SRNS relocation information message; or sending, by the UE, the UE capability information to the RNC by using a measurement report message, where the measurement report message includes event 1a and the UE capability information.

With reference to the first aspect or the first implementation manner of the first aspect, in a third implementation manner of the first aspect, the receiving, by the UE, a measurement parameter sent by the RNC includes: receiving, by the UE, the measurement parameter sent by the RNC by using a measurement control message.

With reference to the first aspect or the first implementation manner of the first aspect, in a fourth implementation manner of the first aspect, the maximum RE value supported by the UE is determined according to a preset fixed propagation condition, a preset downlink physical channel parameter, and a same minimum bit throughput satisfied in different channel environments; or is determined according to a same CQI value reported in different channel environments.

According to a second aspect, a method for configuring a measurement parameter is provided, including: receiving, by a radio network controller RNC, UE capability information sent by a user equipment UE, where the UE capability information includes: a receiver type of the UE or a maximum RE value supported by the UE; configuring, after receiving the UE capability information, an RE value used when the UE measures a cell, where different UE capability information indicates a different RE value configured by the RNC for the UE and used when the UE is configured to measure a cell; and sending, by the RNC, a measurement parameter to the UE, where the measurement parameter includes the RE value.

With reference to the second aspect, in a first implementation manner of the second aspect, the configuring, after receiving the UE capability information, an RE value used when the UE measures a cell is specifically: configuring, by the RNC according to the UE capability information and load of the cell, the RE value used when the UE measures the cell, where when the load of the cell is less than a preset threshold, the RE value is equal to the maximum RE value supported by the UE, or when the load of the cell is greater than or equal to a preset threshold, the RE value is less than the maximum RE value supported by the UE.

With reference to the second aspect or the first implementation manner of the second aspect, in a second implementation manner of the second aspect, the receiving, by an RNC, UE capability information sent by a UE includes: receiving, by the RNC, the UE capability information sent by the UE by using an RRC connection setup complete message; or receiving, by the RNC, the UE capability information sent by the UE by using a UE capability information message; or receiving, by the RNC, the UE capability information sent by the UE by using an SRNS relocation information message; or receiving, by the RNC, the UE capability information sent by the UE by using a measurement report message, where the measurement report message includes event 1a and the UE capability information.

With reference to the second aspect or the first implementation manner of the second aspect, in a third implementation manner of the second aspect, the sending, by the RNC, a measurement parameter to the UE includes: sending, by the RNC, the measurement parameter to the UE by using a measurement control message.

With reference to the second aspect or the first implementation manner of the second aspect, in a fourth implementation manner of the second aspect, the maximum RE value supported by the UE is determined according to a preset fixed propagation condition, a preset downlink physical channel parameter, and a same minimum bit throughput satisfied in different channel environments; or is determined according to a same CQI value reported in different channel environments.

According to a third aspect, a user equipment UE is provided, including: a sending module, configured to send UE capability information to a radio network controller RNC, where the UE capability information includes: a receiver type of the UE or a maximum RE value supported by the UE; and a receiving module, configured to receive a measurement parameter sent by the RNC, where the measurement parameter includes an RE value used when the UE measures a cell.

With reference to the third aspect, in a first implementation manner of the third aspect, when measuring pilot signal quality of a small cell, the UE adds the RE value to the measured pilot signal quality of the small cell; or when measuring pilot signal quality of a macro cell, the UE subtracts the RE value from the measured pilot signal quality of the macro cell.

With reference to the third aspect or the first implementation manner of the third aspect, in a second implementation manner of the third aspect, the sending module is specifically configured to send the UE capability information to the RNC by using an RRC connection setup complete message; or the sending module is specifically configured to send the UE capability information to the RNC by using a UE capability information message; or the sending module is specifically configured to send the UE capability information to the RNC by using an SRNS relocation information message; or the sending module is specifically configured to send the UE capability information to the RNC by using a measurement report message, where the measurement report message includes event 1a and the UE capability information.

With reference to the third aspect or the first implementation manner of the third aspect, in a third implementation manner of the third aspect, the receiving module is specifically configured to receive the measurement parameter sent by the RNC by using a measurement control message.

With reference to the third aspect or the first implementation manner of the third aspect, in a fourth implementation manner of the third aspect, the maximum RE value supported by the UE is determined according to a preset fixed propagation condition, a preset downlink physical channel parameter, and a same minimum bit throughput satisfied in different channel environments; or is determined according to a same CQI value reported in different channel environments.

According to a fourth aspect, an apparatus for configuring a measurement parameter is provided, including: a receiving module, configured to receive UE capability information sent by a user equipment UE, where the UE capability information includes: a receiver type of the UE or a maximum RE value supported by the UE; a configuring module, configured to configure, after the UE capability information is received, an RE value used when the UE measures a cell, where different UE capability information indicates a different RE value configured by the RNC for the UE and used when the UE is configured to measure a cell; and a sending module, configured to send a measurement parameter to the UE, where the measurement parameter includes the RE value.

With reference to the fourth aspect, in a first implementation manner of the fourth aspect, the configuring module is specifically configured to configure, according to the UE capability information and load of the cell, the RE value used when the UE measures the cell, where when the load of the cell is less than a preset threshold, the RE value is equal to the maximum RE value supported by the UE, or when the load of the cell is greater than or equal to a preset threshold, the RE value is less than the maximum RE value supported by the UE.

With reference to the fourth aspect or the first implementation manner of the fourth aspect, in a second implementation manner of the fourth aspect, the receiving module is specifically configured to receive the UE capability information sent by the UE by using an RRC connection setup complete message; or the receiving module is specifically configured to receive the UE capability information sent by the UE by using a UE capability information message; or the receiving module is specifically configured to receive the UE capability information sent by the UE by using an SRNS relocation information message; or the receiving module is specifically configured to receive the UE capability information sent by the UE by using a measurement report message, where the measurement report message includes event 1a and the UE capability information.

With reference to the fourth aspect or the first implementation manner of the fourth aspect, in a third implementation manner of the fourth aspect, the sending module is specifically configured to send the measurement parameter to the UE by using a measurement control message.

With reference to the fourth aspect or the first implementation manner of the fourth aspect, in a fourth implementation manner of the fourth aspect, the maximum RE value supported by the UE is determined according to a preset fixed propagation condition, a preset downlink physical channel parameter, and a same minimum bit throughput satisfied in different channel environments; or is determined according to a same CQI value reported in different channel environments.

According to a fifth aspect, a user equipment UE is provided, including: a transmitter, configured to send UE capability information to a radio network controller RNC, where the UE capability information includes: a receiver type of the UE or a maximum RE value supported by the UE; and a receiver, configured to receive a measurement parameter sent by the RNC, where the measurement parameter includes an RE value used when the UE measures a cell.

With reference to the fifth aspect, in a first implementation manner of the fifth aspect, when measuring pilot signal quality of a small cell, the UE adds the RE value to the measured pilot signal quality of the small cell; or when measuring pilot signal quality of a macro cell, the UE subtracts the RE value from the measured pilot signal quality of the macro cell.

With reference to the fifth aspect or the first implementation manner of the fifth aspect, in a second implementation manner of the fifth aspect, the transmitter is specifically configured to send the UE capability information to the RNC by using an RRC connection setup complete message; or the transmitter is specifically configured to send the UE capability information to the RNC by using a UE capability information message; or the transmitter is specifically configured to send the UE capability information to the RNC by using an SRNS relocation information message; or the transmitter is specifically configured to send the UE capability information to the RNC by using a measurement report message, where the measurement report message includes event 1a and the UE capability information.

With reference to the fifth aspect or the first implementation manner of the fifth aspect, in a third implementation manner of the fifth aspect, the maximum RE value supported by the UE is determined according to a preset fixed propagation condition, a preset downlink physical channel parameter, and a same minimum bit throughput satisfied in different channel environments; or is determined according to a same CQI value reported in different channel environments.

According to a sixth aspect, an apparatus for configuring a measurement parameter is provided, including: a receiver, configured to receive UE capability information sent by a user equipment UE, where the UE capability information includes: a receiver type of the UE or a maximum RE value supported by the UE; a processor, configured to configure, after the UE capability information is received, an RE value used when the UE measures a cell, where different UE capability information indicates a different RE value configured by the RNC for the UE and used when the UE is configured to measure a cell; and a transmitter, configured to send a measurement parameter to the UE, where the measurement parameter includes the RE value.

With reference to the sixth aspect, in a first implementation manner of the sixth aspect, the processor is specifically configured to configure, according to the UE capability information and load of the cell, the RE value used when the UE measures the cell, where when the load of the cell is less than a preset threshold, the RE value is equal to the maximum RE value supported by the UE, or when the load of the cell is greater than or equal to a preset threshold, the RE value is less than the maximum RE value supported by the UE.

With reference to the sixth aspect or the first implementation manner of the sixth aspect, in a second implementation manner of the sixth aspect, the receiver is specifically configured to receive the UE capability information sent by the UE by using an RRC connection setup complete message; or the receiver is specifically configured to receive the UE capability information sent by the UE by using a UE capability information message; or the receiver is specifically configured to receive the UE capability information sent by the UE by using an SRNS relocation information message; or the receiver is specifically configured to receive the UE capability information sent by the UE by using a measurement report message, where the measurement report message includes event 1a and the UE capability information.

With reference to the sixth aspect or the first implementation manner of the sixth aspect, in a third implementation manner of the sixth aspect, the transmitter is specifically configured to send the measurement parameter to the UE by using a measurement control message.

With reference to the sixth aspect or the first implementation manner of the sixth aspect, in a fourth implementation manner of the sixth aspect, the maximum RE value supported by the UE is determined according to a preset fixed propagation condition, a preset downlink physical channel parameter, and a same minimum bit throughput satisfied in different channel environments; or is determined according to a same CQI value reported in different channel environments.

In the embodiments of the present invention, a UE may send UE capability information to an RNC, and the RNC may configure, after receiving the UE capability information, an RE value used when the UE measures a cell, where different UE capability information indicates a different RE value configured by the RNC for the UE and used when the UE is configured to measure a cell, that is, a larger maximum RE supported by the UE indicates better receiver performance of the UE and a larger RE value configured by the RNC for the UE. Therefore, with regard to a same small cell, the RNC can configure a larger RE value for a UE with better receiver performance, so that the UE can trigger a measurement event earlier to facilitate access to the small cell.

Particularly, when load of the macro cell is relatively high, and as a result, a throughput of the UE decreases, a UE with better receiver performance can trigger, by using the methods provided in the embodiments of the present invention, a measurement event earlier to facilitate access to the small cell, thereby decreasing the load of the macro cell. In addition, after accessing the small cell, the UE can continue a service in the small cell, thereby increasing the throughput of the UE.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for configuring a measurement parameter implemented by a UE according to an embodiment of the present invention;
FIG. 2 is a flowchart of a method for configuring a measurement parameter implemented by an RNC according to an embodiment of the present invention;
FIG. 3 is another implementation flowchart of a method for configuring a measurement parameter according to an embodiment of the present invention;
FIG. 3a is still another implementation flowchart of a method for configuring a measurement parameter according to an embodiment of the present invention;
FIG. 4 is a first schematic structural diagram of a user equipment according to an embodiment of the present invention;
FIG. 5 is a first schematic structural diagram of an RNC according to an embodiment of the present invention;
FIG. 6 is a second schematic structural diagram of a user equipment according to an embodiment of the present invention; and
FIG. 7 is a second schematic structural diagram of an RNC according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

An optional application scenario of an embodiment of the present invention may be, for example, that on a heterogeneous network on which both a macro cell and a small cell are deployed, a UE is currently located in the macro cell, and if load of the macro cell is higher, but load of the cell is lower, the UE can trigger, by using a method provided in this embodiment of the present invention, a measurement event earlier to access the small cell, thereby increasing a throughput of the UE.

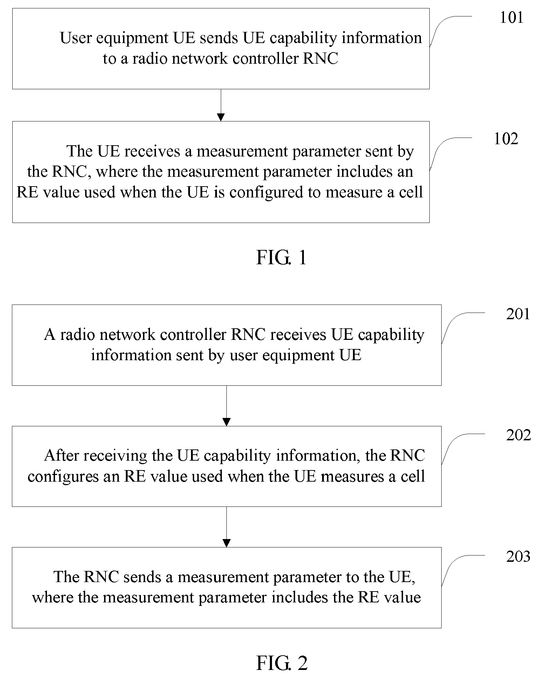

As shown in FIG. 1, this embodiment of the present invention provides a method for configuring a measurement parameter, and the method is a method executed by a user equipment UE and includes the following steps:
101. The user equipment UE sends UE capability information to a radio network controller RNC.

The UE capability information includes: a receiver type of the UE or a maximum RE value supported by the UE.

In this embodiment of the present invention, the receiver type of the UE is corresponding to the maximum RE value supported by the UE, and therefore, the maximum RE value supported by the UE may be determined according to the receiver type of the UE.

A different receiver type of the UE indicates a different corresponding maximum RE value supported by the UE. For example, the receiver type of the UE may be type 3 (type 3), and it may be specified that the maximum RE value supported by the UE may be 3 dB; for another example, the receiver type of the UE may be type 3i (type 3i), and it may be specified that the maximum RE value supported by the UE may be 6 dB.

It should be noted that, in the 3GPP (3rd Generation Partnership Project, 3rd Generation Partnership Project) protocol, a receiver type of a UE is specified as follows: For example, a UE whose receiver type is type 1 refers to a UE using a receiver having a receive diversity function; a UE whose receiver type is type 2 refers to a UE using a chip equalization receiver structure; a UE whose receiver type is type 3 refers to a UE using a chip equalization receiver structure with a receive diversity function; a UE whose receiver type is type 3i refers to a UE using a chip equalization receiver structure with a receive diversity function and interference awareness function.

Generally, the maximum RE value supported by the UE may be used to indicate receiver performance of the UE, and a larger maximum RE value supported by the UE indicates better receiver performance of the UE, whereas a smaller maximum RE value supported by the UE indicates poorer receiver performance of the UE. For a UE, a maximum RE value supported by the UE is generally a fixed value and an inherent capability of the UE, and has been specified before the UE actually accesses a network. A benchmark performance indicator may be specified for defining the receiver performance, and a UE with better receiver performance can achieve the benchmark performance indicator in a poorer environment.

In this embodiment of the present invention, the maximum RE value supported by the UE may be determined in the following manners:
Manner 1: Determine, according to a same minimum bit throughput satisfied in different channel environments in a case of a fixed propagation condition and a specified downlink physical channel parameter, maximum RE values supported by different UEs.

The fixed propagation condition refers to: a channel model, such as, PA3 (Pedestrian-A at 3 km/h, pedestrian-A at 3 km/h), PB3 PB3 (Pedestrian-B at 3 km/h, pedestrian-B at 3 km/h), VA30 (Vehicular-A at 30 km/h, vehicular-A at 30 km/h), or VA120 (Vehicular-A at 120 km/h, vehicular-A at 120 km/h); the specified downlink physical channel parameter includes a channel modulation manner (QPSK, 16QAM, 64QAM, and the like), Ec/Ior (the ratio of the transmit energy per PN chip to the total transmit power spectral density) of an HS-PDSCH (High Speed Physical Downlink Shared Channel, high speed physical downlink shared channel), a quantity of HARQ (Hybrid Automatic Repeat Request, hybrid automatic repeat request) processes, or the like.

The channel environment may be measured by using Ior/Ioc, that is, the ratio of the total transmit power spectral density to the power spectral density of a band limited noise source.

For example, when a minimum bit throughput 1000 kbps of a UE is satisfied in a channel environment in which Ior/Ioc = 10 dB, it may be specified that a maximum RE value supported by the UE is 1 dB; in this case, when a minimum bit throughput 1000 kbps of another UE is satisfied in a channel environment in which Ior/Ioc = 7 dB, it may be determined that a maximum RE value supported by the UE is 4 dB.

Manner 2: Determine, according to a same CQI value reported in different channel environments, maximum RE values supported by different UEs. The channel environment may be measured by using Ior/Ioc, that is, the ratio of the total transmit power spectral density to the power spectral density of a band limited noise source.

For example, when a UE reports a CQI value 3 in a channel environment in which Ior/Ioc = 10 dB, it may be specified that a maximum RE value supported by the UE is 0 dB; and when another UE reports a CQI value 3 in a channel environment in which Ior/Ioc = 7 dB, it may be determined that a maximum RE value supported by the UE is 3 dB.

102. The UE receives a measurement parameter sent by the RNC.

When measuring pilot signal quality of a small cell, the UE adds the RE value to the measured pilot signal quality of the small cell.

When measuring pilot signal quality of a macro cell, the UE subtracts the RE value from the measured pilot signal quality of the macro cell.

After the UE receives the measurement parameter, if the UE measures the pilot signal quality of the small cell, the UE may add the RE value to the measured pilot signal quality, so that the UE can be handed over to the small cell earlier, whereas the RE value is not used for the macro cell in this case; alternatively, if the UE measures the pilot signal quality of the macro cell, the UE may subtract the RE value from the measured pilot signal quality of the macro cell, whereas the RE value may not be used for the small cell, so that quality of the small cell is higher than that of the macro cell when signal quality of the cells is determined, and the UE is handed over to the small cell earlier. After the UE is handed over to the small cell, if the UE measures the pilot signal quality of the macro cell, the UE may subtract the RE value from the measured pilot signal quality of the macro cell; or may add the RE value to the measured pilot signal quality of the small cell, so that the UE is handed over back to the macro cell later, thereby avoiding frequent unnecessary handovers performed between the macro cell and the small cell.

It should be noted that, the measurement parameter RE value mentioned in this embodiment of the present invention may also be a CIO (cell individual offset, cell individual offset) value. A CIO value of each cell may be configured according to a capability reported by the UE and a requirement, for example, cell load, where the CIO value may be a positive value, or may be a negative value. In the networking scenario with the macro cell and the small cell in this embodiment, a CIO value of the small cell may be greater than a CIO value of the macro cell, where the CIO value of the small cell and the CIO value of the macro cell are configured for the UE according to a capability of the UE, so that the UE is handed over to the small cell earlier.

Further, this solution may also be applicable to a networking scenario with two or more macro cells in addition to the networking scenario with the macro cell and the small cell. The network may configure different RE values according to the capability of the UE, so that the UE is more easily handed over from a cell with higher load to a cell with lower load.

In this embodiment of the present invention, after the UE receives the measurement parameter, if the UE detects a pilot signal of the small cell, the UE may add the measurement parameter (that is, add an RE value used when the UE measures the small cell) to the measured pilot signal quality of the small cell to obtain adjusted pilot signal quality. In addition, it is determined, by using the adjusted pilot signal quality, whether a condition for reporting a measurement event is met; if the adjusted pilot signal quality meets the condition for reporting a measurement event, for example, the adjusted pilot signal quality is higher than detected pilot signal quality of a best cell, the UE sends a measurement report to a network side to report an event, for example, event 1d, triggering a cell handover.

The RE value is proportional to the maximum RE value supported by the UE because the RE value is configured by the RNC according to the UE capability information. That is, a larger maximum RE value supported by the UE indicates a larger RE value configured for the UE, and higher adjusted pilot signal quality obtained by adding the RE value to the pilot signal quality after the UE detects the pilot signal quality of the small cell. Further, a handover to the small cell is triggered more easily. It can be learned that, with regard to a same small cell, when maximum RE values supported by different UEs are different, received RE values are also different; a UE supporting a larger maximum RE value receives a larger RE value, and in this case, a handover to the small cell is also triggered more easily, that is, a measurement event can be triggered earlier to facilitate access to the small cell.

For example, both UE 1 and UE 2 are currently located in a macro cell, and when a maximum RE value supported by UE 1 is greater than a maximum RE value supported by UE 2 (in this case, it indicates that receiver performance of UE 1 is better than receiver performance of UE 2), an RE value received by UE 1 may be greater than an RE value received by UE 2; therefore, when UE 1 and UE 2 detect a pilot signal of a same small cell, an adjusted pilot signal obtained by UE 1 by using the RE value received by UE 1 is also higher than an adjusted pilot signal obtained by UE 2 by using the RE value received by UE 2. In this case, UE 1 may trigger measurement event reporting more easily and is handed over to the small cell, that is, a UE with better receiver performance can trigger a measurement event earlier to facilitate access to the small cell.

Particularly, when load of the macro cell is relatively high, and as a result, a throughput of the UE decreases, a UE with better receiver performance can trigger, by using the method provided in this embodiment of the present invention and according to capabilities of different UEs, a measurement event earlier to facilitate access to the small cell, thereby decreasing the load of the macro cell. In addition, after accessing the small cell, the UE can continue a service in the small cell, thereby increasing the throughput of the UE.

Correspondingly, as shown in FIG. 2, an embodiment of the present invention provides a method for configuring a measurement parameter, and the method is a method executed by a radio network controller RNC and includes the following steps:
201. The radio network controller RNC receives UE capability information sent by a user equipment UE.

The UE capability information includes: a receiver type of the UE or a maximum RE value supported by the UE.

A different receiver type of the UE indicates a different corresponding maximum RE value supported by the UE. For example, the receiver type of the UE may be type 3 (type 3), and the maximum RE value supported by the UE may be 3 dB; for another example, the receiver type of the UE may be type 3i (type 3i), and the maximum RE value supported by the UE may be 6 dB.

Generally, the maximum RE value supported by the UE may be used to indicate receiver performance of the UE, and a larger maximum RE value supported by the UE indicates better receiver performance of the UE, whereas a smaller maximum RE value supported by the UE indicates poorer receiver performance of the UE. For a UE, a maximum RE value supported by the UE is generally a fixed value.

In this embodiment of the present invention, the maximum RE value supported by the UE may be determined in the manners in step 101 in the method shown in FIG. 1, and details are not described herein again.

202. After receiving the UE capability information, the RNC configures an RE value used when the UE measures a cell, where different UE capability information indicates a different RE value configured by the RNC for the UE and used when the UE is configured to measure a cell.

For example, the RE value is less than or equal to the maximum RE value supported by the UE, and the RE value is proportional to the maximum RE value supported by the UE.

This step may be implemented in the following manner: First, the RNC determines, according to the UE capability information, the maximum RE value supported by the UE.

Optionally, if the UE capability information received by the RNC is specifically the receiver type of the UE, the RNC may determine, according to the receiver type of the UE, the maximum RE value supported by the UE, because a correspondence between the receiver type of the UE and the maximum RE value supported by the UE is specified.

For example, the receiver type of the UE may be type 3 (type 3), and the RNC may determine that the maximum RE value supported by the UE may be 3 dB; for another example, the receiver type of the UE may be type 3i (type 3i), and the RNC may determine that the maximum RE value supported by the UE may be 6 dB.

Alternatively, if the UE capability information received by the RNC is specifically the maximum RE value supported by the UE, the RNC may directly obtain the maximum RE value supported by the UE.

In addition, after obtaining the maximum RE value supported by the UE, the RNC configures, according to the maximum RE value supported by the UE, the RE value used when the UE measures a cell.

The RE value needs to be less than or equal to the maximum RE value supported by the UE, and the RE value is proportional to the maximum RE value supported by the UE.

For example, the RE value needs to be less than or equal to the maximum RE value supported by the UE, which is for a purpose that quality of a received signal can still be ensured after the UE is handed over to a small cell by using the RE value. A macro cell generally interferes with signal quality of the small cell; therefore, if the RE value of the UE is set to exceed the maximum RE value supported by the UE, a receiver of the UE may be incapable of effectively resisting interference from the macro cell, and in this case, quality of a signal of the small cell received by the UE may deteriorates and even cannot be ensured.

The RE value is proportional to the maximum RE value supported by the UE, so that a UE with better receiver performance can trigger a measurement event earlier to facilitate access to the small cell.

For example, when a maximum RE value supported by UE 1 is greater than a maximum RE value supported by UE 2 (in this case, it indicates that receiver performance of UE 1 is better than receiver performance of UE 2), an RE value configured by the RNC for UE 1 is also greater than an RE value configured by the RNC for UE 2. That is, better receiver performance of a UE indicates a larger RE value configured by the RNC for the UE; when determining a cell handover by using the RE value, the UE with better receiver performance is more easily handed over to the small cell. For details, reference may be made to the related description about how the UE performs a cell handover by using the RE value in step 102 in FIG. 1. In this way, the UE with better receiver performance can trigger a measurement event earlier to facilitate access to the small cell.

203. The RNC sends a measurement parameter to the UE, where the measurement parameter includes the RE value.

In this embodiment of the present invention, the RNC may configure, after receiving the UE capability information, the RE value used when the UE measures a cell, where different UE capability information indicates a different RE value configured by the RNC for the UE and used when the UE is configured to measure a cell, that is, a larger maximum RE supported by the UE indicates better receiver performance of the UE and a larger RE value configured by the RNC for the UE. Therefore, with regard to a same small cell, the RNC can configure a larger RE value for a UE with better receiver performance, so that the UE can trigger a measurement event earlier to facilitate access to the small cell.

For better understanding of the present invention, the following completely describes, in detail by using an example in which a user equipment UE accesses a small cell, a method for configuring a measurement parameter provided in an embodiment of the present invention.

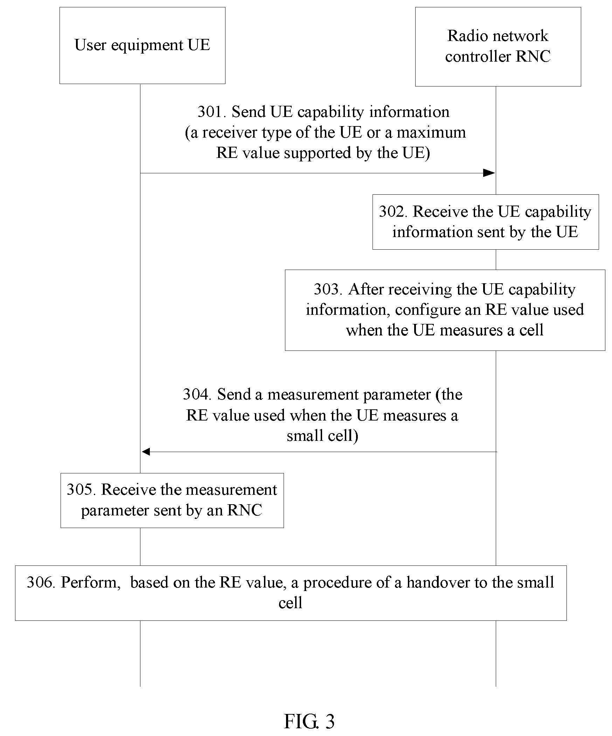

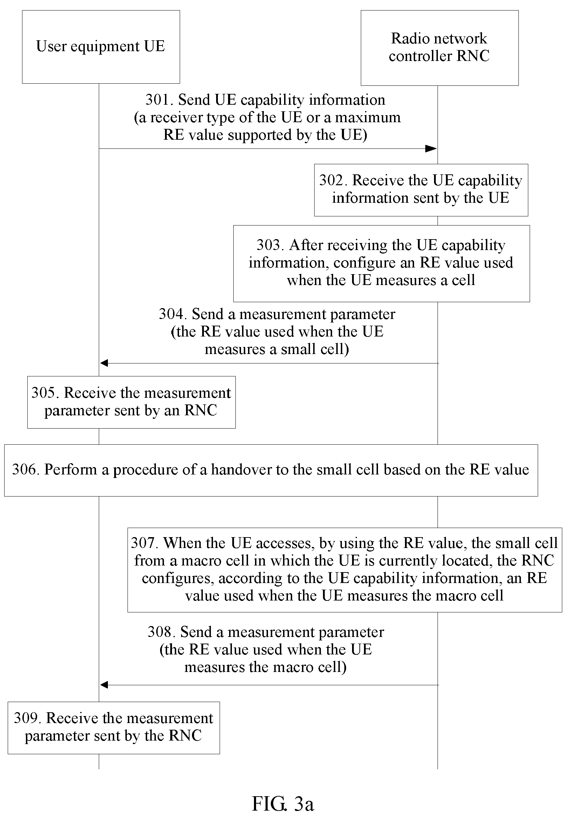

As shown in FIG. 3, the method for configuring a measurement parameter provided in the embodiment of the present invention includes the following steps:
301. A user equipment UE sends UE capability information to a radio network controller RNC.

The UE capability information includes: a receiver type of the UE or a maximum RE value supported by the UE.

For the UE capability information in this step, reference may be made to the detailed description related to the UE capability information in step 101 in FIG. 1, and details are not described herein again.

Specifically, this step may use the following implementation manners:
Manner 1: The UE sends the UE capability information to the RNC by using an RRC connection setup complete message, where the RRC connection setup complete message is the RRC Connection Setup Complete message.
Manner 2: The UE sends the UE capability information to the RNC by using a UE capability information message, where the UE capability information message is the UE Capability Information message.
Manner 3: The UE sends the UE capability information to the RNC by using an SRNS relocation information message, where the SRNS relocation information message is the SRNS Relocation Info message.
Manner 4: The UE sends the UE capability information to the RNC by using a measurement report message, where the measurement report message includes event 1a and the UE capability information.

For example, when triggering to report a measurement report (Measurement Report) message that includes event 1a, the UE sends the UE capability information to the RNC by using the measurement report message that includes event 1a. The UE capability information may be carried in the measurement report message that includes event 1a, where event 1a is used to trigger adding of a cell to an active set.

302. The radio network controller RNC receives the UE capability information sent by the user equipment UE.

Specifically, corresponding to the several implementation manners provided in step 301, this step may be implemented in the following manners:
Manner A: The RNC receives the UE capability information sent by the UE by using the RRC connection setup complete message, where the RRC connection setup complete message is the RRC Connection Setup Complete message.
Manner B: The RNC receives the UE capability information sent by the UE by using the UE capability information message, where the UE capability information message is the UE Capability Information message.
Manner C: The RNC receives the UE capability information sent by the UE by using the SRNS (Serving Radio network subsystem, serving radio network subsystem) relocation information message, where the SRNS relocation information message is the SRNS Relocation Info message.
Manner D: The RNC receives the UE capability information sent by the UE by using the measurement report message, where the measurement report message includes event 1a and the UE capability information.

For example, when the UE is triggered to report the measurement report (Measurement Report) message that includes event 1a, the RNC receives the UE capability information sent by the UE by using the measurement report message that includes event 1a, where event 1a is used to trigger adding of a cell into the active set.

303. After receiving the UE capability information, the RNC configures an RE value used when the UE measures a cell, where different UE capability information indicates a different RE value configured by the RNC for the UE and used when the UE is configured to measure a cell.

For example, the RE value is less than or equal to the maximum RE value supported by the UE, and the RE value is proportional to the maximum RE value supported by the UE.

This step may be implemented in the following manner:
First, the RNC determines, according to the UE capability information, the maximum RE value supported by the UE.

Optionally, if the UE capability information received by the RNC is specifically the receiver type of the UE, the RNC may determine, according to the receiver type of the UE, the maximum RE value supported by the UE, because a correspondence between the receiver type of the UE and the maximum RE value supported by the UE is specified.

For example, the receiver type of the UE may be type 3 (type 3), and the RNC may determine that the maximum RE value supported by the UE may be 3 dB; for another example, the receiver type of the UE may be type 3i (type 3i), and the RNC may determine that the maximum RE value supported by the UE may be 6 dB.

Alternatively, if the UE capability information received by the RNC is specifically the maximum RE value supported by the UE, the RNC may directly obtain the maximum RE value supported by the UE.

In addition, after obtaining the maximum RE value supported by the UE, the RNC configures, according to the maximum RE value supported by the UE, the RE value used when the UE measures a cell.

The RE value needs to be less than or equal to the maximum RE value supported by the UE, and the RE value is proportional to the maximum RE value supported by the UE.

For example, the RE value needs to be less than or equal to the maximum RE value supported by the UE, which is for a purpose that quality of a received signal can still be ensured after the UE is handed over to a small cell by using the RE value. A macro cell generally interferes with signal quality of the small cell; therefore, if the RE value of the UE is set to exceed the maximum RE value supported by the UE, a receiver of the UE may be incapable of effectively resisting interference from the macro cell, and in this case, quality of a signal of the small cell received by the UE may deteriorates and even cannot be ensured.

The RE value is proportional to the maximum RE value supported by the UE, so that a UE with better receiver performance can trigger a measurement event earlier to facilitate access to the small cell.

For example, when a maximum RE value supported by UE 1 is greater than a maximum RE value supported by UE 2 (in this case, it indicates that receiver performance of UE 1 is better than receiver performance of UE 2), an RE value configured by the RNC for UE 1 is also greater than an RE value configured by the RNC for UE 2. That is, better receiver performance of a UE indicates a larger RE value configured by the RNC for the UE; when determining a cell handover by using the RE value, the UE with better receiver performance is more easily handed over to the small cell. For details, reference may be made to the related description about how the UE performs a cell handover by using the RE value in step 102 in FIG. 1. In this way, the UE with better receiver performance can trigger a measurement event earlier to facilitate access to the small cell.

Further, in this step, the RE value used when the UE measures a cell may also be configured according to the UE capability information and load of the small cell.

Specifically, when the load of the small cell is less than a preset threshold, the RE value is equal to the maximum RE value supported by the UE; or when the load of the small cell is greater than or equal to a preset threshold, the RE value is less than the maximum RE value supported by the UE, where a subtracted value may be determined according to a preset value a, that is, the RE value is the maximum RE value supported by the UE minus the value a.

For example, when the maximum RE value supported by the UE is 9 dB, if the load of the small cell is less than the preset threshold, the RNC may configure the RE value to be 9 dB, or if the load of the small cell is greater than or equal to the preset threshold, the RNC may configure the RE value to be a value less than 9 dB, for example, 8 dB.

304. The RNC sends a measurement parameter to the UE, where the measurement parameter includes the RE value.

Specifically, this step may be implemented in the following manner:
The RNC sends the measurement parameter to the UE by using a measurement control message.

The measurement control message is the Measurement Control message.

305. The UE receives the measurement parameter sent by the RNC.

The measurement parameter includes the RE value used when the UE measures a cell, and the RE value is determined by the RNC according to the UE capability information, where the RE value is less than or equal to the maximum RE value supported by the UE, and the RE value is proportional to the maximum RE value supported by the UE.

306. Perform a procedure of a handover to a small cell based on the RE value.

Specifically, if the UE detects a pilot signal of the small cell, the UE may add the measurement parameter (that is, add the RE value used when the UE measures the small cell) to measured pilot signal quality of the small cell to obtain adjusted pilot signal quality.

In addition, it is determined, by using the adjusted pilot signal quality, whether a condition for reporting a measurement event is met; if the adjusted pilot signal quality meets the condition for reporting a measurement event,
for example, the adjusted pilot signal quality is higher than detected pilot signal quality of a best cell, the UE sends a measurement report to a network side to report a cell handover event, for example, event 1d.

After receiving the cell handover event (for example, event 1d) sent by the UE, the RNC hands the UE over from the macro cell in which the UE is currently located to the small cell.

The RE value is proportional to the maximum RE value supported by the UE because the RE value is configured by the RNC according to the UE capability information. That is, a larger maximum RE value supported by the UE indicates a larger RE value received by the UE, and higher adjusted pilot signal quality obtained by adding the RE value to the pilot signal quality after the UE detects the pilot signal quality of the small cell. Further, a handover to the small cell is triggered more easily. It can be learned that, with regard to a same small cell, when maximum RE values supported by different UEs are different, received RE values are also different; a UE supporting a larger maximum RE value receives a larger RE value, and in this case, a handover to the small cell is also triggered more easily, that is, a measurement event can be triggered earlier to facilitate access to the small cell.

Particularly, when load of the macro cell is relatively high, and as a result, a throughput of the UE decreases, a UE with better receiver performance can trigger, by using the method provided in this embodiment of the present invention, a measurement event earlier to facilitate access to the small cell, thereby decreasing the load of the macro cell. In addition, after accessing the small cell, the UE can continue a service in the small cell, thereby increasing the throughput of the UE.

Further, after the UE accesses the small cell, the UE may be easily handed over back to the macro cell because signal quality of the small cell is poorer than signal quality of the macro cell. To avoid frequent handovers of the UE back to the macro cell, as shown in FIG. 3a, the method for configuring a measurement parameter provided in this embodiment of the present invention further includes the following steps:
307. When the UE accesses, by using the RE value, the small cell from a macro cell in which the UE is currently located, the RNC configures, according to the UE capability information, an RE value used when the UE measures the macro cell.

Optionally, when the RE value is a positive number and the UE is located in the small cell and detects pilot signal quality of the macro cell, the UE may subtract the RE value from the pilot signal quality of the macro cell to obtain adjusted pilot signal quality of the macro cell.

In another embodiment of the present invention, the RE value may further be a negative number.

For example, when the maximum RE value supported by the UE is 9 dB, the RNC may configure the RE value to be -9 dB. When the UE is located in the small cell and detects the pilot signal quality of the macro cell, the UE may add the RE value to the pilot signal quality of the macro cell to obtain adjusted pilot signal quality of the macro cell.

The RE value is a negative number, which is equivalent to that the obtained adjusted pilot signal quality of the macro cell is poorer than the actually detected pilot signal quality of the macro cell. Therefore, a probability of a handover of the UE back to the macro cell can be reduced, and frequent handovers of the UE back to the macro cell are avoided effectively.

308. The RNC sends, to the UE, the RE value used when the UE measures the macro cell.

309. The UE receives the RE value used when the UE measures the macro cell and sent by the RNC.

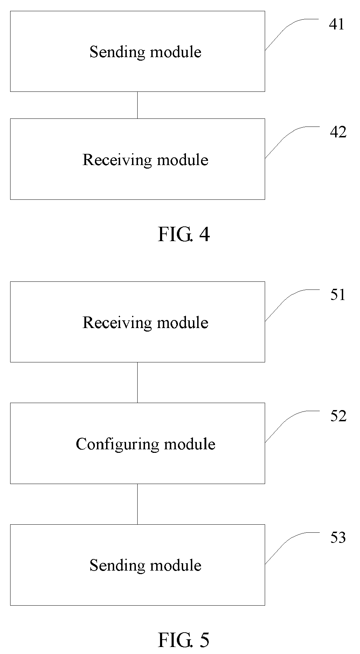

As shown in FIG. 4, an embodiment of the present invention provides a user equipment UE, including: a sending module 41, configured to send UE capability information to a radio network controller RNC; and a receiving module 42, configured to receive a measurement parameter sent by the RNC.

The UE capability information includes: a receiver type of the UE or a maximum RE value supported by the UE; a different receiver type of the UE indicates a different corresponding maximum RE value supported by the UE. For example, the receiver type of the UE may be type 3 (type 3), and the maximum RE value supported by the UE may be 3 dB; for another example, the receiver type of the UE may be type 3i (type 3i), and the maximum RE value supported by the UE may be 6 dB.

Generally, the maximum RE value supported by the UE may be used to indicate receiver performance of the UE, and a larger maximum RE value supported by the UE indicates better receiver performance of the UE, whereas a smaller maximum RE value supported by the UE indicates poorer receiver performance of the UE. For a UE, a maximum RE value supported by the UE is generally a fixed value.

In this embodiment of the present invention, the maximum RE value supported by the UE may be determined in the manners provided in step 101 in the method shown in FIG. 1. For details, reference may be made to the detailed description in step 101.

The measurement parameter includes an RE value used when the UE measures a cell, where the RE value is configured by the RNC according to the UE capability information.

In this embodiment of the present invention, after the UE receives the measurement parameter, if the UE detects a pilot signal of a small cell, the UE may add the measurement parameter (that is, add an RE value used when the UE measures the small cell) to measured pilot signal quality of the small cell to obtain adjusted pilot signal quality. In addition, it is determined, by using the adjusted pilot signal quality, whether a condition for reporting a measurement event is met; if the adjusted pilot signal quality meets the condition for reporting a measurement event, for example, the adjusted pilot signal quality is higher than detected pilot signal quality of a best cell, the UE sends a measurement report to a network side to report an event, for example, event 1d, triggering a cell handover.

The RE value is proportional to the maximum RE value supported by the UE because the RE value is configured by the RNC according to the UE capability information. That is, a larger maximum RE value supported by the UE indicates a larger RE value received by the UE, and higher adjusted pilot signal quality obtained by adding the RE value to the pilot signal quality after the UE detects the pilot signal quality of the small cell. Further, a handover to the small cell is triggered more easily. It can be learned that, with regard to a same small cell, when maximum RE values supported by different UEs are different, received RE values are also different; a UE supporting a larger maximum RE value receives a larger RE value, and in this case, a handover to the small cell is also triggered more easily, that is, a measurement event can be triggered earlier to facilitate access to the small cell.

For example, both UE 1 and UE 2 are currently located in a macro cell, and when a maximum RE value supported by UE 1 is greater than a maximum RE value supported by UE 2 (in this case, it indicates that receiver performance of UE 1 is better than receiver performance of UE 2), an RE value received by UE 1 is also greater than an RE value received by UE 2; therefore, when UE 1 and UE 2 detect a pilot signal of a same small cell, an adjusted pilot signal obtained by UE 1 by using the RE value received by UE 1 is also higher than an adjusted pilot signal obtained by UE 2 by using the RE value received by UE 2. In this case, UE 1 is to be handed over to the small cell more easily, that is, a UE with better receiver performance can trigger a measurement event earlier to facilitate access to the small cell.

Particularly, when load of the macro cell is relatively high, and as a result, a throughput of the UE decreases, a UE with better receiver performance can trigger, by using the method provided in this embodiment of the present invention, a measurement event earlier to facilitate access to the small cell, thereby decreasing the load of the macro cell. In addition, after accessing the small cell, the UE can continue a service in the small cell, thereby increasing the throughput of the UE.

Further, the maximum RE value supported by the UE is determined according to a preset fixed propagation condition, a preset downlink physical channel parameter, and a same minimum bit throughput satisfied in different channel environments; or is determined according to a same CQI value reported in different channel environments.

Further, the RE value received by the receiving module is configured by the RNC according to the UE capability information and load of the small cell, where when the load of the small cell is less than a preset threshold, the RE value is equal to the maximum RE value supported by the UE; or when the load of the small cell is greater than or equal to a preset threshold, the RE value is less than the maximum RE value supported by the UE.

Further, that the sending module 41 sends the UE capability information to the RNC may be implemented in the following manners: The sending module is specifically configured to send the UE capability information to the RNC by using an RRC connection setup complete message; or the sending module is specifically configured to send the UE capability information to the RNC by using a UE capability information message; or the sending module is specifically configured to send the UE capability information to the RNC by using an SRNS relocation information message; or the sending module is specifically configured to send the UE capability information to the RNC by using a measurement report message, where the measurement report message includes event 1a and the UE capability information.

Further, the receiving module 42 is specifically configured to receive the measurement parameter sent by the RNC by using a measurement control message.

Further, after the UE accesses the small cell, the UE may be easily handed over back to the macro cell because signal quality of the small cell is poorer than signal quality of the macro cell.

To avoid frequent handovers of the UE back to the macro cell, the receiving module 42 is further configured to: when the UE accesses, by using the RE value, the small cell from the macro cell in which the UE is currently located, receive a second measurement parameter sent by the RNC, where the second measurement parameter includes: an RE value used when the UE measures the macro cell, and the RE value is configured by the RNC according to the UE capability information.

As shown in FIG. 5, an embodiment of the present invention provides an apparatus for configuring a measurement parameter, where the apparatus may be specifically an RNC, including: a receiving module 51, configured to receive UE capability information sent by a user equipment UE; a configuring module 52, configured to configure, after the receiving module receives the UE capability information, an RE value used when the UE measures a cell, where different UE capability information indicates a different RE value configured by the RNC for the UE and used when the UE is configured to measure a cell; and a sending module 53, configured to send a measurement parameter to the UE, where the measurement parameter includes the RE value.

The UE capability information includes: a receiver type of the UE or a maximum RE value supported by the UE; for the UE capability information, reference may be made to the detailed description related to the UE capability information in step 101 in FIG. 1, and details are not described herein again.

In this embodiment of the present invention, the RNC may configure, after receiving the UE capability information, the RE value used when the UE measures a cell, where different UE capability information indicates a different RE value configured by the RNC for the UE and used when the UE is configured to measure a cell, that is, a larger maximum RE supported by the UE indicates better receiver performance of the UE and a larger RE value configured by the RNC for the UE. Therefore, with regard to a same small cell, the RNC can configure a larger RE value for a UE with better receiver performance, so that the UE can trigger a measurement event earlier to facilitate access to the small cell.

Further, the maximum RE value supported by the UE is determined according to a preset fixed propagation condition, a preset downlink physical channel parameter, and a same minimum bit throughput satisfied in different channel environments; or is determined according to a same CQI value reported in different channel environments.

It should be noted that, specifically, the configuring module 52 may configure, according to the UE capability information, the maximum RE value supported by the UE.

Optionally, if the UE capability information received by the receiving module 51 is specifically the receiver type of the UE, the RNC may determine, according to the receiver type of the UE, the maximum RE value supported by the UE, because the receiver type of the UE is corresponding to the maximum RE value supported by the UE.

For example, the receiver type of the UE may be type 3 (type 3), and the RNC may determine that the maximum RE value supported by the UE may be 3 dB; for another example, the receiver type of the UE may be type 3i (type 3i), and the RNC may determine that the maximum RE value supported by the UE may be 6 dB.

Alternatively, if the UE capability information received by the receiving module 51 is specifically the maximum RE value supported by the UE, the configuring module 52 may directly obtain the maximum RE value supported by the UE.

Then, after determining the maximum RE value supported by the UE, the configuring module configures, according to the maximum RE value supported by the UE, the RE value used when the UE measures a cell.

The RE value needs to be less than or equal to the maximum RE value supported by the UE, which is for a purpose that quality of a received signal can still be ensured after the UE is handed over to a small cell by using the RE value. A macro cell generally interferes with signal quality of the small cell; therefore, if the RE value of the UE is set to exceed the maximum RE value supported by the UE, a receiver of the UE may be incapable of effectively resisting interference from the macro cell, and in this case, quality of a signal of the small cell received by the UE may deteriorates and even cannot be ensured.

The RE value is proportional to the maximum RE value supported by the UE, so that a UE with better receiver performance can trigger a measurement event earlier to facilitate access to the small cell.

Further, the configuring module 52 is specifically configured to configure, according to the UE capability information and load of the cell, the RE value used when the UE measures the cell.

When the load of the cell is less than a preset threshold, the RE value is equal to the maximum RE value supported by the UE, or when the load of the cell is greater than or equal to a preset threshold, the RE value is less than the maximum RE value supported by the UE.

Further, the receiving module 51 is specifically configured to receive the UE capability information sent by the UE by using an RRC connection setup complete message; or the receiving module 51 is specifically configured to receive the UE capability information sent by the UE by using a UE capability information message; or the receiving module 51 is specifically configured to receive the UE capability information sent by the UE by using an SRNS relocation information message; or the receiving module 51 is specifically configured to receive the UE capability information sent by the UE by using a measurement report message.

Further, the sending module 53 is specifically configured to send the measurement parameter to the UE by using a measurement control message.

Further, after the UE accesses the small cell, the UE may be easily handed over back to the macro cell because signal quality of the small cell is poorer than signal quality of the macro cell.

To avoid frequent handovers of the UE back to the macro cell, the configuring module 52 is further configured to: when the UE accesses the small cell from the macro cell in which the UE is currently located, configure, according to the UE capability information, an RE value used when the UE measures the macro cell, where the RE value is a negative number; the sending module is further configured to send a second measurement parameter to the UE, where the second measurement parameter includes the RE value.

For example, when the maximum RE value supported by the UE is 9 dB, the RNC may configure the RE value to be -9 dB. When the UE is located in the small cell and detects pilot signal quality of the macro cell, the UE may add the RE value to the pilot signal quality of the macro cell to obtain adjusted pilot signal quality of the macro cell.

The RE value is a negative number, which is equivalent to that the obtained adjusted pilot signal quality of the macro cell is poorer than the actually detected pilot signal quality of the macro cell. Therefore, a probability of a handover of the UE back to the macro cell can be reduced, and frequent handovers of the UE back to the macro cell are avoided effectively.

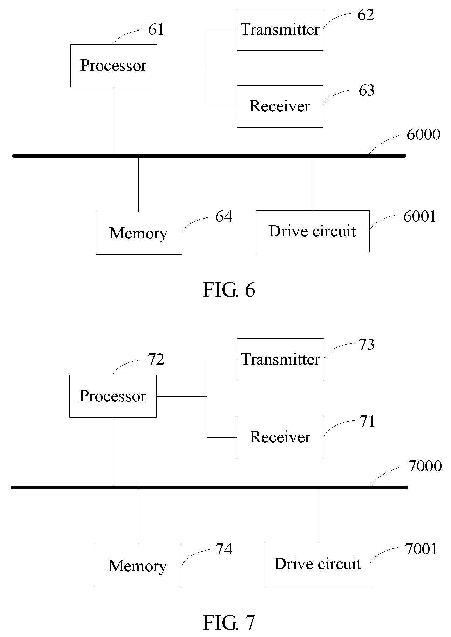

As shown in FIG. 6, an embodiment of the present invention provides a user equipment UE, including: a processor 61, a transmitter 62, a receiver 63, a memory 64, a bus 6000, and a drive circuit 6001.

The transmitter 62 is configured to send UE capability information to a radio network controller RNC, where the UE capability information includes: a receiver type of the UE or a maximum RE value supported by the UE; the receiver 63 is configured to receive a measurement parameter sent by the RNC, where the measurement parameter includes an RE value used when the UE measures a cell, and the RE value is configured by the RNC according to the UE capability information, where the RE value is less than or equal to the maximum RE value supported by the UE, and the RE value is proportional to the maximum RE value supported by the UE.

In this embodiment of the present invention, for the UE capability information and the maximum RE value supported by the UE, reference may be made to the related detailed description in step 101.

In this embodiment of the present invention, after the UE receives the measurement parameter, if the UE detects a pilot signal of a small cell, the UE may add the measurement parameter (that is, add an RE value used when the UE measures the small cell) to measured pilot signal quality of the small cell to obtain adjusted pilot signal quality. In addition, it is determined, by using the adjusted pilot signal quality, whether a condition for reporting a measurement event is met; if the adjusted pilot signal quality meets the condition for reporting a measurement event, for example, the adjusted pilot signal quality is higher than detected pilot signal quality of a best cell, the UE sends a measurement report to a network side to report an event, for example, event 1d, triggering a cell handover.

The RE value is proportional to the maximum RE value supported by the UE because the RE value is configured by the RNC according to the UE capability information. That is, a larger maximum RE value supported by the UE indicates a larger RE value received by the UE, and higher adjusted pilot signal quality obtained by adding the RE value to the pilot signal quality after the UE detects the pilot signal quality of the small cell. Further, a handover to the small cell is triggered more easily. It can be learned that, with regard to a same small cell, when maximum RE values supported by different UEs are different, received RE values are also different; a UE supporting a larger maximum RE value receives a larger RE value, and in this case, a handover to the small cell is also triggered more easily, that is, a measurement event can be triggered earlier to facilitate access to the small cell.

For example, both UE 1 and UE 2 are currently located in a macro cell, and when a maximum RE value supported by UE 1 is greater than a maximum RE value supported by UE 2 (in this case, it indicates that receiver performance of UE 1 is better than receiver performance of UE 2), an RE value received by UE 1 is also greater than an RE value received by UE 2; therefore, when UE 1 and UE 2 detect a pilot signal of a same small cell, an adjusted pilot signal obtained by UE 1 by using the RE value received by UE 1 is also higher than an adjusted pilot signal obtained by UE 2 by using the RE value received by UE 2. In this case, UE 1 is to be handed over to the small cell more easily, that is, a UE with better receiver performance can trigger a measurement event earlier to facilitate access to the small cell.

Particularly, when load of the macro cell is relatively high, and as a result, a throughput of the UE decreases, a UE with better receiver performance can trigger, by using the method provided in this embodiment of the present invention, a measurement event earlier to facilitate access to the small cell, thereby decreasing the load of the macro cell. In addition, after accessing the small cell, the UE can continue a service in the small cell, thereby increasing the throughput of the UE.

It should be noted that the transmitter 62 and the receiver 63 may be coupled to an antenna.

In specific implementation of this embodiment, the memory includes at least one or more of the following memory devices: a read-only memory, a random access memory, or a non-volatile random access memory, and the memory provides an instruction and data for the processor.

The processor 61 may be an integrated circuit chip, and has a signal processing capability. During implementation, each step of the foregoing methods can be completed by using an integrated logic circuit of hardware in the processor or an instruction in a form of software. These instructions may be implemented and controlled by working with the processor and are used to execute the methods disclosed in the embodiments of the present invention. The foregoing processor may be further a general purpose processor, a digital signal processor (Digital Signal Processing, DSP), an application-specific integrated circuit (application specific integrated circuit), a field programmable gate array (Field Programmable Gate Array, FPGA) or another programmable logic device, a discrete gate or transistor logic device, or a discrete hardware component.

The foregoing general purpose processor may be a micro processor or the processor may be any conventional processor, decoder, or the like. The steps of the methods disclosed with reference to the embodiments of the present invention may be directly performed and completed by a hardware processor, or performed and completed by a combination of a hardware module and a software module in the processor. The software module may be located in a mature storage medium in the art, such as a random access memory, a flash memory, a read-only memory, a programmable read-only memory or an electrically erasable programmable memory, or a register.

The drive circuit 6001 is configured to provide drive for each piece of hardware in the UE, so that each piece of hardware can work normally.

In addition, all hardware components of the UE are coupled together by using the bus system 6000, where the bus system 6000 further includes a power bus, a control bus, and a status signal bus, in addition to a data bus. However, for clear description, all buses in FIG. 6 are marked as the bus system 6000.

Further, the maximum RE value supported by the UE is determined according to a preset fixed propagation condition, a preset downlink physical channel parameter, and a same minimum bit throughput satisfied in different channel environments; or is determined according to a same CQI value reported in different channel environments.

Further, the RE value received by the receiver 63 is configured by the RNC according to the UE capability information and load of the cell, where when the load of the cell is less than a preset threshold, the RE value is equal to the maximum RE value supported by the UE, or when the load of the cell is greater than or equal to a preset threshold, the RE value is less than the maximum RE value supported by the UE.

Further, the transmitter 62 is specifically configured to send the UE capability information to the RNC by using an RRC connection setup complete message; or the transmitter 62 is specifically configured to send the UE capability information to the RNC by using a UE capability information message; or the transmitter 62 is specifically configured to send the UE capability information to the RNC by using an SRNS relocation information message; or the transmitter 62 is specifically configured to send the UE capability information to the RNC by using a measurement report message, where the measurement report message includes event 1a and the UE capability information.

Further, the receiver 63 is specifically configured to receive the measurement parameter sent by the RNC by using a measurement control message.

Further, after the UE accesses the small cell, the UE may be easily handed over back to the macro cell because signal quality of the small cell is poorer than signal quality of the macro cell.

To avoid frequent handovers of the UE back to the macro cell, the receiver 63 is further configured to: when the UE accesses, by using the RE value, the small cell from the macro cell in which the UE is currently located, receive a second measurement parameter sent by the RNC, where the second measurement parameter includes: an RE value used when the UE measures the macro cell, and the RE value is configured by the RNC according to the UE capability information.

As shown in FIG. 7, an embodiment of the present invention provides an apparatus for configuring a measurement parameter, and the apparatus may be specifically an RNC, including: a receiver 71, a processor 72, a transmitter 73, a memory 74, a bus 7000, and a drive circuit 7001.

The receiver 71 is configured to receive UE capability information sent by a user equipment UE, where the UE capability information includes: a receiver type of the UE or a maximum RE value supported by the UE; the processor 72 is configured to configure, after the receiver 71 receives the UE capability information, an RE value used when the UE measures a cell, where different UE capability information indicates a different RE value configured by the RNC for the UE and used when the UE is configured to measure a cell, the RE value is less than or equal to the maximum RE value supported by the UE, and the RE value is proportional to the maximum RE value supported by the UE; the transmitter 73 is configured to send a measurement parameter to the UE, where the measurement parameter includes the RE value.

For the UE capability information, reference may be made to the detailed description related to the UE capability information in step 101 in FIG. 1, and details are not described herein again.

In this embodiment of the present invention, the RNC may configure, after receiving the UE capability information, the RE value used when the UE measures a cell, where different UE capability information indicates a different RE value configured by the RNC for the UE and used when the UE is configured to measure a cell, that is, a larger maximum RE supported by the UE indicates better receiver performance of the UE and a larger RE value configured by the RNC for the UE. Therefore, with regard to a same small cell, the RNC can configure a larger RE value for a UE with better receiver performance, so that the UE can trigger a measurement event earlier to facilitate access to the small cell.

Further, the maximum RE value supported by the UE is determined according to a preset fixed propagation condition, a preset downlink physical channel parameter, and a same minimum bit throughput satisfied in different channel environments; or is determined according to a same CQI value reported in different channel environments.

It should be noted that, specifically, the processor 72 may configure, according to the UE capability information, the maximum RE value supported by the UE.

Optionally, if the UE capability information received by the receiver 71 is specifically the receiver type of the UE, the RNC may determine, according to the receiver type of the UE, the maximum RE value supported by the UE, because the receiver type of the UE is corresponding to the maximum RE value supported by the UE.

For example, the receiver type of the UE may be type 3 (type 3), and the RNC may determine that the maximum RE value supported by the UE may be 3 dB; for another example, the receiver type of the UE may be type 3i (type 3i), and the RNC may determine that the maximum RE value supported by the UE may be 6 dB.

Alternatively, if the UE capability information received by the receiver 71 is specifically the maximum RE value supported by the UE, the processor 72 may directly obtain the maximum RE value supported by the UE.

In addition, after determining the maximum RE value supported by the UE, the processor configures, according to the maximum RE value supported by the UE, the RE value used when the UE measures a cell.

The RE value needs to be less than or equal to the maximum RE value supported by the UE, and the RE value is proportional to the maximum RE value supported by the UE.

The RE value needs to be less than or equal to the maximum RE value supported by the UE, which is for a purpose that quality of a received signal can still be ensured after the UE is handed over to a small cell by using the RE value. A macro cell generally interferes with signal quality of the small cell; therefore, if the RE value of the UE is set to exceed the maximum RE value supported by the UE, a receiver of the UE may be incapable of effectively resisting interference from the macro cell, and in this case, quality of a signal of the small cell received by the UE may deteriorates and even cannot be ensured.

The RE value is proportional to the maximum RE value supported by the UE, so that a UE with better receiver performance can trigger a measurement event earlier to facilitate access to the small cell.

It should be further noted that the transmitter 72 and the receiver 73 may be coupled to an antenna.

In specific implementation of this embodiment, the memory includes at least one or more of the following memory devices: a read-only memory, a random access memory, or a non-volatile random access memory, and the memory provides an instruction and data for the processor.

The processor may be an integrated circuit chip, and has a signal processing capability. During implementation, each step of the foregoing methods can be completed by using an integrated logic circuit of hardware in the processor or an instruction in a form of software. These instructions may be implemented and controlled by working with the processor and are used to execute the methods disclosed in the embodiments of the present invention. The foregoing processor may be further a general purpose processor, a digital signal processor (Digital Signal Processing, DSP), an application-specific integrated circuit (application specific integrated circuit), a field programmable gate array (Field Programmable Gate Array, FPGA) or another programmable logic device, a discrete gate or transistor logic device, or a discrete hardware component.

The foregoing general purpose processor may be a micro processor or the processor may be any conventional processor, decoder, or the like. The steps of the methods disclosed with reference to the embodiments of the present invention may be directly performed and completed by a hardware processor, or performed and completed by a combination of a hardware module and a software module in the processor. The software module may be located in a mature storage medium in the art, such as a random access memory, a flash memory, a read-only memory, a programmable read-only memory or an electrically erasable programmable memory, or a register.

The drive circuit 7001 is configured to provide drive for each piece of hardware in the RNC, so that each piece of hardware can work normally.

In addition, all hardware components of the RNC are coupled together by using the bus system 7000, where the bus system 7000 further includes a power bus, a control bus, and a status signal bus, in addition to a data bus. However, for clear description, all buses in FIG. 7 are marked as the bus system 7000.

Further, the processor 72 is specifically configured to configure, according to the UE capability information and load of the cell, the RE value used when the UE measures the cell, where when the load of the cell is less than a preset threshold, the RE value is equal to the maximum RE value supported by the UE; or when the load of the cell is greater than or equal to a preset threshold, the RE value is less than the maximum RE value supported by the UE.

Further, the receiver 71 is specifically configured to receive the UE capability information sent by the UE by using an RRC connection setup complete message; or the receiver 71 is specifically configured to receive the UE capability information sent by the UE by using a UE capability information message; or the receiver 71 is specifically configured to receive the UE capability information sent by the UE by using an SRNS relocation information message; or the receiver 71 is specifically configured to receive the UE capability information sent by the UE by using a measurement report message.

Further, the transmitter 73 is specifically configured to send the measurement parameter to the UE by using a measurement control message.

Further, after the UE accesses the small cell, the UE may be easily handed over back to the macro cell because signal quality of the small cell is poorer than signal quality of the macro cell.

To avoid frequent handovers of the UE back to the macro cell, the processor 72 is further configured to: when the UE accesses the small cell from the macro cell in which the UE is currently located, configure, according to the UE capability information, an RE value used when the UE measures the macro cell.

The transmitter 73 is further configured to send, to the UE, the RE used when the UE is configured to measure the macro cell.

Further, the maximum RE value supported by the UE is determined according to a preset fixed propagation condition, a preset downlink physical channel parameter, and a same minimum bit throughput satisfied in different channel environments; or is determined according to a same CQI value reported in different channel environments.

The embodiments of the present invention are mainly applied to cell measurement processing when a UE is located on a heterogeneous network.

The embodiments of the present invention are applicable to a wireless network, such as a UMTS network, a GSM (Global System for Mobile Communications, Global System for Mobile Communications) network, a GPRS (General Packet Radio Service, general packet radio service) network, a CDMA2000 (Code Division Multiple Access 2000, Code Division Multiple Access 2000) network, a TD-SCDMA (Time Division Synchronous Code Division Multiple Access, Time Division Synchronous Code Division Multiple Access) network, an LTE (Long Term Evolution, Long Term Evolution) network, a WLAN (Wireless Local Area Networks, wireless local area network)/WiFi (Wireless Fidelity, Wireless Fidelity) network, and a WiMAX (Worldwide Interoperability for Microwave Access, Worldwide Interoperability for Microwave Access) network, especially a scenario in which a small cell base station is deployed on these wireless networks.

Based on the foregoing descriptions of the implementation manners, a person skilled in the art may clearly understand that the present invention may be implemented by software in addition to necessary universal hardware or by hardware only. In most circumstances, the former is an exemplary implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for configuring a measurement parameter, comprising:
sending, by a user equipment UE, UE capability information to a radio network controller RNC, wherein the UE capability information comprises: a receiver type of the UE or a maximum range expansion RE value supported by the UE; and
receiving, by the UE, a measurement parameter sent by the RNC, wherein the measurement parameter comprises an RE value used when the UE measures a cell.

2. The method for configuring a measurement parameter according to claim 1, wherein:
when measuring pilot signal quality of a small cell, the UE adds the RE value to the measured pilot signal quality of the small cell; or
when measuring pilot signal quality of a macro cell, the UE subtracts the RE value from the measured pilot signal quality of the macro cell.

3. The method for configuring a measurement parameter according to claim 1 or 2, wherein the sending, by a UE, UE capability information to an RNC comprises:
sending, by the UE, the UE capability information to the RNC by using an RRC connection setup complete message; or
sending, by the UE, the UE capability information to the RNC by using a UE capability information message; or
sending, by the UE, the UE capability information to the RNC by using a serving radio network subsystem SRNS relocation information message; or
sending, by the UE, the UE capability information to the RNC by using a measurement report message, wherein the measurement report message comprises event 1a and the UE capability information.

4. The method for configuring a measurement parameter according to claim 1 or 2, wherein the receiving, by the UE, a measurement parameter sent by the RNC comprises:
receiving, by the UE, the measurement parameter sent by the RNC by using a measurement control message.

5. The method for configuring a measurement parameter according to claim 1 or 2, wherein:
the maximum RE value supported by the UE is determined according to a preset fixed propagation condition, a preset downlink physical channel parameter, and a same minimum bit throughput satisfied in different channel environments; or is determined according to a same CQI value reported in different channel environments.

6. A method for configuring a measurement parameter, comprising:
Receiving, by a radio network controller RNC, UE capability information sent by a user equipment UE, wherein the UE capability information comprises: a receiver type of the UE or a maximum RE value supported by the UE;
configuring, by the RNC after receiving the UE capability information, an RE value used when the UE measures a cell, wherein different UE capability information indicates a different RE value configured by the RNC for the UE and used when the UE measures a cell; and
sending, by the RNC, a measurement parameter to the UE, wherein the measurement parameter comprises the RE value.

7. The method for configuring a measurement parameter according to claim 6, wherein the configuring, after receiving the UE capability information, an RE value used when the UE measures a cell is specifically:
configuring, by the RNC according to the UE capability information and load of the cell, the RE value used when the UE measures the cell, wherein
when the load of the cell is less than a preset threshold, the RE value is equal to the maximum RE value supported by the UE, or when the load of the cell is greater than or equal to a preset threshold, the RE value is less than the maximum RE value supported by the UE.

8. The method for configuring a measurement parameter according to claim 6 or 7, wherein the receiving, by an RNC, UE capability information sent by a UE comprises:
receiving, by the RNC, the UE capability information sent by the UE by using an RRC connection setup complete message; or
receiving, by the RNC, the UE capability information sent by the UE by using a UE capability information message; or
receiving, by the RNC, the UE capability information sent by the UE by using an SRNS relocation information message; or
receiving, by the RNC, the UE capability information sent by the UE by using a measurement report message, wherein the measurement report message comprises event 1a and the UE capability information.

9. The method for configuring a measurement parameter according to claim 6 or 7, wherein the sending, by the RNC, a measurement parameter to the UE comprises:
sending, by the RNC, the measurement parameter to the UE by using a measurement control message.

10. The method for configuring a measurement parameter according to claim 6 or 7, wherein:
the maximum RE value supported by the UE is determined according to a preset fixed propagation condition, a preset downlink physical channel parameter, and a same minimum bit throughput satisfied in different channel environments; or is determined according to a same CQI value reported in different channel environments.

11. A user equipment UE, comprising:
a sending module, configured to send UE capability information to a radio network controller RNC, wherein the UE capability information comprises: a receiver type of the UE or a maximum RE value supported by the UE; and
a receiving module, configured to receive a measurement parameter sent by the RNC, wherein the measurement parameter comprises an RE value used when the UE measures a cell.

12. The user equipment UE according to claim 11, wherein:
when measuring pilot signal quality of a small cell, the UE adds the RE value to the measured pilot signal quality of the small cell; or
when measuring pilot signal quality of a macro cell, the UE subtracts the RE value from the measured pilot signal quality of the macro cell.

13. The user equipment UE according to claim 11 or 12, wherein: the sending module is specifically configured to send the UE capability information to the RNC by using an RRC connection setup complete message; or
the sending module is specifically configured to send the UE capability information to the RNC by using a UE capability information message; or
the sending module is specifically configured to send the UE capability information to the RNC by using an SRNS relocation information message; or
the sending module is specifically configured to send the UE capability information to the RNC by using a measurement report message, wherein the measurement report message comprises event 1a and the UE capability information.

14. The user equipment UE according to claim 11 or 12, wherein the receiving module is specifically configured to receive the measurement parameter sent by the RNC by using a measurement control message.

15. The user equipment UE according to claim 11 or 12, wherein:
the maximum RE value supported by the UE is determined according to a preset fixed propagation condition, a preset downlink physical channel parameter, and a same minimum bit throughput satisfied in different channel environments; or is determined according to a same CQI value reported in different channel environments.

16. An apparatus for configuring a measurement parameter, comprising:
a receiving module, configured to receive UE capability information sent by a user equipment UE, wherein the UE capability information comprises: a receiver type of the UE or a maximum RE value supported by the UE;
a configuring module, configured to configure, after the receiving module receives the UE capability information, an RE value used when the UE measures a cell, wherein different UE capability information indicates a different RE value configured by the RNC for the UE and used when the UE is configured to measure a cell; and
a sending module, configured to send a measurement parameter to the UE, wherein the measurement parameter comprises the RE value.

17. The apparatus for configuring a measurement parameter according to claim 16, wherein the configuring module is specifically configured to configure, according to the UE capability information and load of the cell, the RE value used when the UE measures the cell, wherein
when the load of the cell is less than a preset threshold, the RE value is equal to the maximum RE value supported by the UE, or when the load of the cell is greater than or equal to a preset threshold, the RE value is less than the maximum RE value supported by the UE.

18. The apparatus for configuring a measurement parameter according to claim 16 or 17, wherein: the receiving module is specifically configured to receive the UE capability information sent by the UE by using an RRC connection setup complete message; or
the receiving module is specifically configured to receive the UE capability information sent by the UE by using a UE capability information message; or
the receiving module is specifically configured to receive the UE capability information sent by the UE by using an SRNS relocation information message; or
the receiving module is specifically configured to receive the UE capability information sent by the UE by using a measurement report message, wherein the measurement report message comprises event 1a and the UE capability information.

19. The apparatus for configuring a measurement parameter according to claim 16 or 17, wherein:
the sending module is specifically configured to send the measurement parameter to the UE by using a measurement control message.

20. The apparatus for configuring a measurement parameter according to claim 16 or 17, wherein:
the maximum RE value supported by the UE is determined according to a preset fixed propagation condition, a preset downlink physical channel parameter, and a same minimum bit throughput satisfied in different channel environments; or is determined according to a same CQI value reported in different channel environments.

21. User equipment UE, comprising:
a transmitter, configured to send UE capability information to a radio network controller RNC, wherein the UE capability information comprises: a receiver type of the UE or a maximum RE value supported by the UE; and
a receiver, configured to receive a measurement parameter sent by the RNC, wherein the measurement parameter comprises an RE value used when the UE measures a cell.

22. The user equipment UE according to claim 21, wherein: when measuring pilot signal quality of a small cell, the UE adds the RE value to the measured pilot signal quality of the small cell; or
when measuring pilot signal quality of a macro cell, the UE subtracts the RE value from the measured pilot signal quality of the macro cell.

23. The user equipment UE according to claim 21 or 22, wherein: the transmitter is specifically configured to send the UE capability information to the RNC by using an RRC connection setup complete message; or
the transmitter is specifically configured to send the UE capability information to the RNC by using a UE capability information message; or
the transmitter is specifically configured to send the UE capability information to the RNC by using an SRNS relocation information message; or
the transmitter is specifically configured to send the UE capability information to the RNC by using a measurement report message, wherein the measurement report message comprises event 1a and the UE capability information.

24. The user equipment UE according to claim 21 or 22, wherein the receiver is specifically configured to receive the measurement parameter sent by the RNC by using a measurement control message.

25. The user equipment UE according to claim 21 or 22, wherein:
the maximum RE value supported by the UE is determined according to a preset fixed propagation condition, a preset downlink physical channel parameter, and a same minimum bit throughput satisfied in different channel environments; or is determined according to a same CQI value reported in different channel environments.

26. An apparatus for configuring a measurement parameter, comprising:
a receiver, configured to receive UE capability information sent by user equipment UE, wherein the UE capability information comprises: a receiver type of the UE or a maximum RE value supported by the UE;
a processor, configured to configure, after the receiver receives the UE capability information, an RE value used when the UE measures a cell, wherein different UE capability information indicates a different RE value configured by the RNC for the UE and used when the UE is configured to measure a cell; and
a transmitter, configured to send a measurement parameter to the UE, wherein the measurement parameter comprises the RE value.

27. The apparatus for configuring a measurement parameter according to claim 26, wherein the processor is specifically configured to configure, according to the UE capability information and load of the cell, the RE value used when the UE measures the cell, wherein
when the load of the cell is less than a preset threshold, the RE value is equal to the maximum RE value supported by the UE, or when the load of the cell is greater than or equal to a preset threshold, the RE value is less than the maximum RE value supported by the UE.

28. The apparatus for configuring a measurement parameter according to claim 26 or 27, wherein: the receiver is specifically configured to receive the UE capability information sent by the UE by using an RRC connection setup complete message; or
the receiver is specifically configured to receive the UE capability information sent by the UE by using a UE capability information message; or
the receiver is specifically configured to receive the UE capability information sent by the UE by using an SRNS relocation information message; or
the receiver is specifically configured to receive the UE capability information sent by the UE by using a measurement report message, wherein the measurement report message comprises event 1a and the UE capability information.

29. The apparatus for configuring a measurement parameter according to claim 26 or 27, wherein:
the transmitter is specifically configured to send the measurement parameter to the UE by using a measurement control message.

30. The apparatus for configuring a measurement parameter according to claim 26 or 27, wherein:
the maximum RE value supported by the UE is determined according to a preset fixed propagation condition, a preset downlink physical channel parameter, and a same minimum bit throughput satisfied in different channel environments; or is determined according to a same CQI value reported in different channel environments.
